# EUROPÄISCHE PATENTANMELDUNG

(11) **EP 1 221 775 A1**
(43) Veröffentlichungstag der Anmeldung: **10.07.2002**
(21) Anmeldenummer: 01440425.5
(22) Anmeldetag: 20.12.2001
(51) Int. Cl.: H04B 3/54, H04B 3/56

(54) **Verfahren zum Übertragen von Telekommunikationssignalen**

(30) Priorität: 09.01.2001 DE 10100584
(71) Anmelder: ALCATEL, 75008 Paris (FR)
(72) Erfinder: Bäder, rainer, 70771 Leinfelden (DE)
(74) Vertreter: Rausch, Gabriele, Dr.

(57) **Zusammenfassung**

Aufgabe der Erfindung ist es, eine kostengünstige Alternative zur Erweiterung des örtlichen Freiheitsgrades bei der Benutzung hausinterner Endgeräte bereitzustellen. Beim erfindungsgemäßen Verfahren zum Übertragen von Telekommunikationssignalen werden aus dem Telekommunikationsnetz (1) des Netzbetreibers empfangene Telekommunikationssignale über das lokales, hausinternes Stromversorgungsnetz (5) des Endkunden weitergeleitet. Das lokale, hausinterne Stromversorgungsnetz (5) des Endkunden beinhaltend eine Vorrichtung (7) zur Generierung einer Verbindung zwischen dem Telekommunikationsnetz (1) des Netzbetreibers und dem hausinternen Stromversorgungsnetz (5) des Endkunden zur Ermöglichung der Übertragung von Telekommunikationssignalen über das hausinterne Stromversorgungsnetz (5) des Endkunden.

## Beschreibung

Die Erfindung betrifft ein Verfahren zum Übertragen von Telekommunikationssignalen.

Üblicherweise werden Telekommunikationssignale über ein Telekommunikationsnetz zu Endkunden übertragen. Hausintern werden die Telekommunikationssignale über ein hausinternes Telekommunikationsnetz weitergeleitet. Die Schnittstelle zwischen dem hausinternen und dem Telekommunikationsnetz des Netzbetreibers bildet der Netzabschluss.

Auf Grund der üblicherweise hausintern sehr beschränkten Anzahl von TAE-Buchsen ist der hausinterne Einsatzbereich von Endgeräten örtlich beschränkt. Für Sprachdienste wie Telephonie ist durch DECT bereits eine Alternative gefunden, den örtlichen Freiheitsgrad zu erweitern. Beim Internet-Surfen ist stets eine TAE-Buchse in PC-Nähe erforderlich oder der unschöne Einsatz langer, über Putz verlegter Kabel. Bluetooth soll hier Abhilfe schaffen, wird aber wohl relativ teure Zusatzgeräte oder gar komplett neue Geräte erforderlich machen. Zudem könnten Kunden auf Grund der Funkstrahlung und dem daraus resultierenden hausinternen Elektrosmog vom Kauf abgeschreckt werden.

Ferner drängen neue Netzbetreiber, beispielsweise Strom-Netzbetreiber in den Telekommunikationsmarkt. Strom-Netzbetreiber suchen ihre bereits bestehenden Stromversorgungsnetze auszubauen, um darüber zusätzlich Telekommunikationsdienste anzubieten. Auf diese Art und Weise werden sogenannte powerline networks kreiert. Die Telekommunikationssignale werden über das Stromversorgungsnetz des Strom-Netzbetreibers und das hausinterne Stromversorgungsnetz des Endkunden übertragen. An den Steckdosen des hausinternen Stromversorgungsnetzes werden dann über Adapter sowohl 110 oder 220 Volt-Signale als auch Telekommunikationssignale abgegriffen und Telekommunikationssignale eingespeist. Steckdosen sind vielfach im Haus verteilt, so dass der örtliche Freiheitsgrad erweitert wird. Zur Implementierung von powerline networks sind allerdings hohe Investitionen notwendig. Kosten entstehen z.B. auf Grund von Interferenzproblemen zwischen Telekommunikations- und Stromsignalen sowie an Transformatorstationen, an denen die Telekommunikationssignale vorbei geführt werden müssen.

Aufgabe der Erfindung ist es, eine kostengünstige Alternative zur Erweiterung des örtlichen Freiheitsgrades bei der Benutzung hausinterner Endgeräte bereitzustellen.

Gelöst wird die Aufgabe durch eine Vorrichtung nach Anspruch 1, ein lokales, hausinternes Stromversorgungsnetz nach Anspruch 7 sowie ein Verfahren zum Übertragen von Telekommunikationssignalen nach Anspruch 8.

Bei der Erfindung wird eine Verbindung geschaffen zwischen einem Telekommunikationsnetz eines Netzbetreibers und einem hausinternen Stromversorgungsnetz eines Endkunden. Auf einfache Art und Weise erhält der Kunde die Möglichkeit, Telekommunikations-Endgeräte an Steckdosen anzuschließen ohne den Telekommunikations-Netzbetreiber wechseln zu müssen. Das hausinterne Stromversorgungsnetz besteht bereits, so dass die Investitionen sich auf eine Brücke zwischen hausexternem Telekommunikationsnetz und hausinternem Stromversorgungsnetz und einen Adapter für jedes angeschlossene Endgerät beschränken. Bei Neubauten kann auf die Verlegung von hausinternen Telekommunikationskabeln verzichtet werden. Beim erfindungsgemäßen Verfahren zum Übertragen von Telekommunikationssignalen werden aus dem Telekommunikationsnetz des Netzbetreibers empfangene Telekommunikationssignale über das lokales, hausinternes Stromversorgungsnetz des Endkunden weitergeleitet. Das lokale, hausinterne Stromversorgungsnetz des Endkunden beinhaltend eine Vorrichtung zur Generierung einer Verbindung zwischen dem Telekommunikationsnetz des Netzbetreibers und dem hausinternen Stromversorgungsnetz des Endkunden zur Ermöglichung der Übertragung von Telekommunikationssignalen über das hausinterne Stromversorgungsnetz des Endkunden. Das hausinterne Stromversorgungsnetz des Endkunden kann innerhalb einer Wohnung, innerhalb eines Einfamilienhauses, eines Geschäftshauses oder auf mehrere Häuser verteilt, z.B. Firma mit mehreren Firmengebäuden, verlegt sein. Wichtig ist eine gemeinsame Telekommunikations-Abrechnung sowie eine gemeinsame Stromabrechnung. Bei der Verbindung muss zum einen darauf geachtet werden, dass keine Stromsignale ins externe Telekommunikationsnetz gelangen. Zum anderen dürfen keine Telekommunikationssignale ins externe Stromversorgungsnetz gelangen. Im hausinternen Stromversorgungsnetz werden die Stromsignale und dazu überlagert die Telekommunikationssignale übertagen. Die Verbindung wird z.B. auf einfache Art und Weise unter Verwendung von zwei Filtern realisiert. Das erste Filter wird zwischen externem Telekommunikationsnetz und internem Stromversorgungsnetz geschaltet. Es leitet Telekommunikationssignale weiter und sperrt Stromsignale. Stromsignale werden in der Regel bei 50 Hz übertragen. Wenn das erste Filter für 50 Hz nicht durchlässig ist, so sperrt es die Stromsignale, die dann nicht ins externe Telekommunikationsnetz gelangen. Das zweite Filter wird zwischen externem Stromversorgungsnetz und internem Stromversorgungsnetz geschaltet. Das zweite Filter leitet Stromsignale weiter und sperrt Telekommunikationssignale. Das zweite Filter ist z.B. nur im Bereich um 50 Hz durchlässig. Telekommunikationssignale, die üblicherweise in diesem Frequenzbereich nicht übertragen werden, werden somit gesperrt. Werden über das externe Telekommunikationsnetz Gleichstromsignale zwecks Fernspeisung übertragen, so dürfen diese nicht ins interne Stromversorgungsnetz gelangen. Die Gleichstromsignale würden einen DC-Offset erzeugen, der bei zahlreichen Endgeräten, wie z.B. Bügeleisen, zur Zerstörung bei Betrieb führen würde. Das erste Filter ist in diesem Fall derart ausgestaltet, dass es keine Gleichstromsignale weiterleitet. Neben der Abwendung von Gefahren hat die Maßnahme, dass die aus dem Telekommunikationsnetz des Netzbetreibers empfangenen Gleichstromsignale nicht über das lokale, hausinterne Stromversorgungsnetz des Endkunden weitergeleitet werden den großen Vorteil für den Netzbetreiber des Telekommunikationsnetzes, dass alle ans interne Stromversorgungsnetz angeschlossenen Endgeräte über das externe Stromversorgungsnetz des Strom-Netzbetreibers gespeist werden, und nicht über die Fernspeisung des Telekommunikationsnetzes. Dadurch entfallen für den Netzbetreiber des Telekommunikationsnetzes Aufwendungen für die Bereitstellung von Fernspeisungen, was eine erhebliche Kostenersparnis darstellt. Gleichzeitig wird der Stromverbrauch der Endgeräte über den Stromzähler des Endkunden abgerechnet, wodurch der Strom-Netzbetreiber eine zusätzliche Einnahmequelle erhält. Für die einzelnen Endkunden sind die zusätzlichen Stromkosten nur eine sehr geringfügige Mehrbelastung, dem Netzbetreiber des Telekommunikationsnetzes mit Tausenden von Endkunden bringt dies hingegen eine erhebliche Kosteneinsparung und dem Stromnetzbetreiber mit ebenso Tausenden Endkunden eine erhebliche Umsatzsteigerung.

Vorteilhafte Ausgestaltungen der Erfindung sind den abhängigen Ansprüchen und der nachfolgenden Beschreibung zu entnehmen.

Im folgenden werden Ausführungsbeispiele der Erfindung unter Zuhilfenahme von Figuren erläutert. Es zeigen:
- Fig. 1: eine schematische Darstellung einer erfindungsgemäßen Anbindung an ein hausinternes Stromversorgungsnetz,
- Fig. 2: ein Frequenzdiagramm,
- Fig. 3: eine detailliertere Darstellung der erfindungsgemäßen Anbindung ans hausinterne Stromversorgungsnetz,
- Fig. 4: einen Aufbau einer erfindungsgemäßen Anbindung,
- Fig. 5: einen Aufbau eines Adapters und eines Endgerätes,
- Fig. 6: einen Aufbau eines weiteren Adapters und eines weiteren Endgerätes,
- Fig. 7: einen Aufbau eines weiteren Endgerätes,
- Fig. 8: eine schematische Darstellung einer weiteren Anbindung ans hausinterne Stromversorgungsnetz,
- Fig. 9: eine schematische Darstellung einer weiteren Anbindung ans hausinterne Stromversorgungsnetz,
- Fig. 10: einen Aufbau eines Sicherungskastens und
- Fig. 11: einen Aufbau einer Telekommunikations-Anlage.

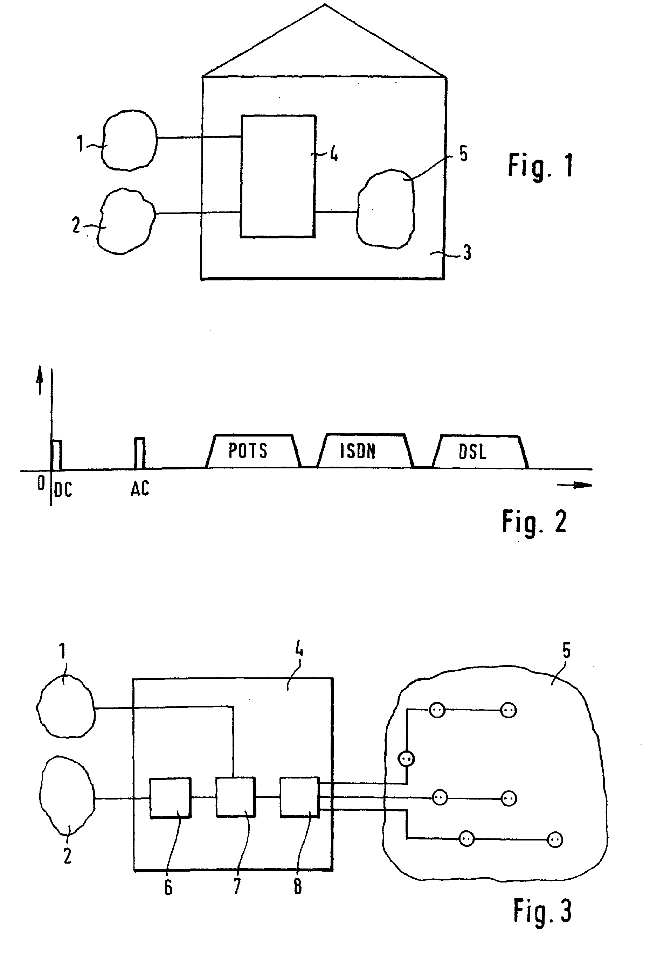

Das erste Ausführungsbeispiel wird nun anhand der Figuren 1 bis 8 erläutert. Fig. 1 zeigt die schematische Darstellung einer erfindungsgemäßen Anbindung an ein hausinternes Stromversorgungsnetz. Ein Telekommunikationsnetz 1 überträgt Telekommunikationssignale zu einem Endkunden. Ein Stromversorgungsnetz 2 eines Strom-Netzbetreibers überträgt Strom zum Endkunden. Im Haus 3 des Endkunden werden die Telekommunikationssignale und der Strom empfangen. Es ist ein hausinternes Stromversorgungsnetz 5 vorgesehen, das primär zur Verteilung des empfangenen Stroms dient. Über das hausinterne Stromversorgungsnetz 5 werden elektrische Geräte des Endkunden mit Strom versorgt. Diese Geräte sind z. B. Haushaltsgeräte wie Kühlschrank, Spülmaschine, Waschmaschine, Staubsauger oder Fernsehgerät, HiFi-Anlage, Radiowecker. Zusätzlich wird das hausinterne Stromversorgungsnetz 5 dazu benutzt, Telekommunikationssignale zu übertragen. Eine Verbindung zwischen den drei Netzen schafft Vorrichtung 4. Vorrichtung 4 dient dazu, zum einen die Stromsignale aus dem Stromversorgungsnetz 2 ins hausinterne Stromversorgungsnetz 5 weiterzuleiten und zum anderen eine bidirektionale Verbindung zwischen Telekommunikationsnetz 1 und hausinternem Stromversorgungsnetz 5 zu schaffen, um empfangene Telekommunikationssignale über das hausinterne Stromversorgungsnetz 5 bzw. das Telekommunikationsnetz 1 weiterzuleiten. Die Weiterleitung der Telekommunikationssignale erfolgt transparent, d.h. es erfolgt keine Protokollumsetzung oder -anpassung. Auf diese Weise werden Kosten minimiert. Vorrichtung 4 dient ferner dazu, zu verhindern, dass Gleichstromsignale, die als Fernspeisung im Telekommunikationsnetz 1 übertragen werden weder ins Stromversorgungsnetz 2 noch ins hausinterne Stromversorgungsnetz 5 gelangen. Des weiteren verhindert Vorrichtung 4, dass Telekommunikationssignale ins Stromversorgungsnetz 2 gelangen. Auf diese Art und Weise bestehen hausextern zwei unabhängige Netze, eins für Telekommunikationssignale und eins für Stromsignale und hausintern ein Netz über das sowohl Telekommunikationssignale als auch Stromsignale übertragen werden.

Fig. 2 zeigt ein Frequenzdiagramm für verschiedene Signale. Auf der horizontalen Achse ist die Frequenz aufgetragen, auf der vertikalen Achse die Intensität der Signale. Das Frequenzdiagramm ist ein Skizze und nicht maßstabgetreu. Bei der Frequenz Null werden die Gleichstromsignale DC übertragen. Die Gleichstromsignale DC dienen als Fernspeisung. Sie werden üblicherweise im Telekommunikationsnetz 1 übertragen, z.B. zur Fernspeisung von analogen Telefonen. Bei der Frequenz 50 Hz werden üblicherweise die Wechselstromsignale AC übertragen. Die Wechselstromsignale werden im Niederspannungsbereich in einigen Ländern bei 110 Volt und in anderen Ländern bei 220 Volt übertragen und dienen zur Stromversorgung von Geräten des Endkunden. Sie werden als Stromsignale über das Stromversorgungsnetz 2 übertragen und ins hausinterne Stromversorgungsnetz 5 weitergeleitet. Oberhalb von 50 Hz sind verschiedene Frequenzbereiche für die Übertragung von Telekommunikationssignalen reserviert. Diese Telekommunikationssignale werden im Telekommunikationsnetz 1 übertragen und über das hausinterne Stromversorgungsnetz 5 weitergeleitet. Ein erster Frequenzbereich ist beispielsweise für die Übertragung von POTS-Signalen reserviert; POTS = Plain Old Telephone Network. Mittels der POTS-Signale werden analoge Telephondienste angeboten. Ein zweiter Frequenzbereich oberhalb des ersten Frequenzbereichs ist beispielsweise für die Übertragung von ISDN reserviert; ISDN = Integrated Services Digital Network. Mittels der ISDN-Signale werden digitale Dienste, insbesondere digitale Telephondienste angeboten. Ein dritter Frequenzbereich oberhalb des zweiten Frequenzbereichs ist beispielsweise für die Übertragung von DSL-Signalen reserviert; DSL = Digital Subscriber Line. Beim DSL gibt es verschiedene Varianten, so z.B. ADSL, VDSL, HDSL, SDLS, etc. Mittels der DSL-Signale werden digitale Dienste, insbesondere digitale Datendienste, wie z.B. Internetanwendungen, E-Mail, Videotelephonie angeboten.

Fig. 3 zeigt detailliertere Darstellung der erfindungsgemäßen Anbindung ans hausinterne Stromversorgungsnetz aus Fig. 1. Vorrichtung 4 verbindet das externe Telekommunikationsnetz 1 und das externe Stromversorgungsnetz 2 mit dem hausinternen Stromversorgungsnetz 5. Vorrichtung 4 beinhaltet einen Stromzähler 6, eine Vorrichtung 7 und einen Sicherungskasten 8, die in Reihe geschaltet sind.

Stromzähler 6 ist ein handelsüblicher Stromzähler, der zumeist im Keller eines Hauses angeordnet ist und zur Registrierung des Stromverbrauchs des Endkunden dient.

Sicherungskasten 8 ist ein handelsüblicher Sicherungskasten, der zumeist innerhalb des Wohnbereichs des Endkunden im Flur angeordnet ist und zum einen dazu dient das hausinterne Stromversorgungsnetz durch elektrische Sicherungen vor Überlast zu schützen und zum anderen eine Aufteilung auf verschiedene elektrische Leitungen vorsieht. Innerhalb des Wohnbereichs des Endkunden sind dann mehrere Stromkreisläufe mit mehreren Steckdosen vorhanden, die insgesamt das hausinterne Stromversorgungsnetz 5 bilden.

Vorrichtung 7 dient dazu das externe Telekommunikationsnetz 1 mit dem hausinternen Stromversorgungsnetz 5 zu verbinden.

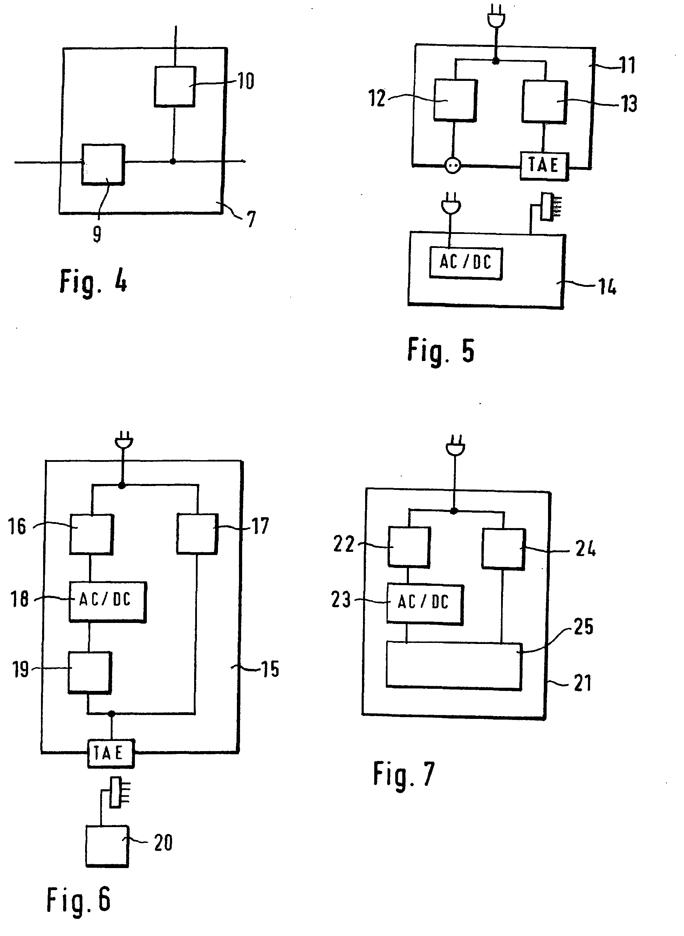

Fig. 4 zeigt eine Ausgestaltung der Vorrichtung 7 aus Fig. 3.

Vorrichtung 7 beinhaltet ein Filter 9 und ein Filter 10.

Filter 10 dient zur Weiterleitung von Telekommunikationssignalen und zur Sperrung von Gleichstromsignalen. Es ist zwischen Telekommunikationsnetz 1 und hausinternem Stromversorgungsnetz 5 geschaltet. Filter 10 ist ein Hochpassfilter mit einer Grenzfrequenz im Bereich von 50 Hz bis 70 Hz oder ein Bandpassfilter mit einer unteren Grenzfrequenz im Bereich von 50 Hz bis 70 Hz oder dergleichen. Durch die Wahl der Grenzfrequenz oberhalb von 50 Hz wird zum einen verhindert, dass Gleichstromsignale DC weitergeleitet werden. Gleichstromsignale DC aus dem Telekommunikationsnetz 1 werden somit weder ins Stromversorgungsnetz 2 noch ins Stromversorgungsnetz 5 weitergeleitet. Zum anderen wird verhindert, dass Wechselstromsignale AC weitergeleitet werden. Wechselstromsignale AC werden somit nicht ins Telekommunikationsnetz 1 weitergeleitet. Filter 10 sperrt damit Gleichstromsignale DC und Wechselstromsignale AC, ist aber durchlässig für Telekommunikationssignale wie POTS, ISDN und DSL. Filter 10 ist ein passives Filter, dass bidirektional wirkt, so dass Telekommunikationssignale sowohl vom Telekommunikationsnetz 1 ins hausinterne Stromversorgungsnetz 5 gelangen als auch umgekehrt.

Filter 9 dient zur Sperrung von Telekommunikationssignalen und zur Weiterleitung von Wechselstromsignalen. Es ist zwischen das hausinterne Stromversorgungsnetz 5 des Endkunden und das Stromversorgungsnetz 2 geschaltet. Filter 9 ist ein Tiefpassfilter mit einer Grenzfrequenz im Bereich von 50 Hz bis 70 Hz ist oder ein Bandpassfilter mit einer oberen Grenzfrequenz im Bereich von 50 Hz bis 70 Hz oder dergleichen. Durch die Wahl der Grenzfrequenz oberhalb von 50 Hz wird verhindert, dass Telekommunikationssignale weitergeleitet werden. Weder Telekommunikationssignale aus dem Telekommunikationsnetz 1 noch Telekommunikationssignale aus dem hausinternen Stromversorgungsnetz 5 werden somit ins Stromversorgungsnetz 2 weitergeleitet. Filter 9 sperrt damit Telekommunikationssignale, ist aber durchlässig für Wechselstromsignale AC, die vom Stromversorgungsnetz 2 ins hausinterne Stromversorgungsnetz 5 weitergeleitet werden. Bei der Verwendung eines Bandpassfilters werden zudem auch Gleichstromsignale gesperrt.

Zur Erhöhung der Sicherheit kann anstelle des Filters 10 eine Reihenschaltung aus zwei Filtern verwendet werden, die jeweils den gleichen Aufbau wie Filter 10 haben. Ebenso können anstelle eines Filters 9 zwei Filter verwendet werden.

Insgesamt stellt Vorrichtung 7 eine kostengünstige Einrichtung mit geringen Abmessungen dar, die auf einfache Art und Weise beispielsweise im Keller in örtlicher Nähe zum Stromzähler in den Strompfad eingeschleift und mit dem Telekommunikationsnetz 1 verbunden werden kann, dessen Anschluss üblicherweise in unmittelbarer örtlicher Nähe zum Stromzähler im Betriebsraum angeordnet ist.

Fig. 5 zeigt einen Adapter und ein Endgerät.

Adapter 11 hat drei Anschlüsse. Der erste Anschluss ist ein 110 und/oder 220 Volt Stecker, der in eine Steckdose des hausinternen Stromversorgungsnetzes 5 eingesteckt werden kann. Über den ersten Anschluss werden sowohl Stromsignale als auch Telekommunikationssignale empfangen als auch Telekommunikationssignale ausgesendet. Der zweite Anschluss ist eine TAE-Buchse, in die ein entsprechendes Gegenstück, ein TAE-Stecker des Endgerätes 14 eingesteckt werden kann. Über den zweiten Anschluss werden bidirektional Telekommunikationssignale übertragen. Der dritte Anschluss ist ein Steckdosenanschluss, in den ein 110 und/oder 220 Volt Stecker eingesteckt werden kann. Der dritte Anschluss dient der Stromspeisung des Endgeräts 14.

Der erste Anschluss ist mit dem zweiten Anschluss über ein Filter 13 verbunden. Filter 13 ist ein Hochpassfilter mit einer Grenzfrequenz im Bereich von 50 Hz bis 70 Hz oder ein Bandpassfilter mit einer unteren Grenzfrequenz im Bereich von 50 Hz bis 70 Hz oder dergleichen. Durch die Wahl der Grenzfrequenz oberhalb von 50 Hz wird zum einen verhindert, dass Wechselstromsignale AC weitergeleitet werden. Filter 13 sperrt daher Wechselstromsignale AC und leitet Telekommunikationssignale weiter. Der erste Anschluss ist ferner über ein Filter 12 mit dem dritten Anschluss verbunden. Filter 12 ist ein Tiefpassfilter mit einer Grenzfrequenz im Bereich von 50 Hz bis 70 Hz ist oder ein Bandpassfilter mit einer oberen Grenzfrequenz im Bereich von 50 Hz bis 70 Hz oder dergleichen. Durch die Wahl der Grenzfrequenz oberhalb von 50 Hz wird verhindert, dass Telekommunikationssignale weitergeleitet werden. Filter 12 sperrt somit Telekommunikationssignale und leitet Wechselstromsignale AC weiter.

Endgerät 14 weist einen AC/DC-Umsetzer AC/DC auf, der aus den empfangenen Wechselstromsignalen AC Gleichstromsignale generiert, die dem Endgerät als Stromversorgung dienen. Endgerät 14 ist beispielsweise ein DECT-Telefon mit Ladestation, ein Faxgerät oder ein Computer.

Fig. 6 zeigt einen weiteren Adapter und ein weiteres Endgerät.

Adapter 15 weist zwei Anschlüsse auf. Der erste Anschluss ist ein 110 und/oder 220 Volt Stecker, der in eine Steckdose des hausinternen Stromversorgungsnetzes eingesteckt werden kann. Über den ersten Anschluss werden sowohl Stromsignale als auch Telekommunikationssignale empfangen als auch Telekommunikationssignale ausgesendet. Der zweite Anschluss ist eine TAE-Buchse, in die ein entsprechendes Gegenstück, ein TAE-Stecker des Endgerätes 20 eingesteckt werden kann. Über den zweiten Anschluss werden bidirektional Telekommunikationssignale übertragen sowie unidirektional eine Fernspeisung für Endgerät 20 in Form von Gleichstromsignalen DC.

Adapter 15 beinhaltet drei Filter und einen AC/DC-Umsetzer 18.

Filter 17 ist ein Hochpassfilter mit einer Grenzfrequenz im Bereich von 50 Hz bis 70 Hz oder ein Bandpassfilter mit einer unteren Grenzfrequenz im Bereich von 50 Hz bis 70 Hz oder dergleichen. Durch die Wahl der Grenzfrequenz oberhalb von 50 Hz wird zum einen verhindert, dass Wechselstromsignale AC weitergeleitet werden. Filter 17 sperrt daher Wechselstromsignale AC und leitet Telekommunikationssignale weiter.

Filter 16 ist ein Tiefpassfilter mit einer Grenzfrequenz im Bereich von 50 Hz bis 70 Hz oder ein Bandpassfilter mit einer oberen Grenzfrequenz im Bereich von 50 Hz bis 70 Hz oder dergleichen. Durch die Wahl der Grenzfrequenz oberhalb von 50 Hz wird verhindert, dass Telekommunikationssignale weitergeleitet werden. Filter 12 sperrt somit Telekommunikationssignale und leitet Wechselstromsignale AC weiter.

Filter 19 ist ein Tiefpassfilter mit einer Grenzfrequenz im Bereich von 50 Hz bis 70 Hz oder ein Bandpassfilter mit einer oberen Grenzfrequenz im Bereich von 50 Hz bis 70 Hz oder ein Tiefpassfilter mit einer Grenzfrequenz im Bereich um 10 Hz oder dergleichen. Durch die Wahl der Grenzfrequenz oberhalb von 50 Hz wird verhindert, dass Telekommunikationssignale weitergeleitet werden. Filter 19 sperrt somit Telekommunikationssignale und leitet Gleichstromsignale DC weiter.

Endgerät 20 ist beispielsweise ein analoges Telefon.

Fig. 7 zeigt ein weiteres Endgerät.

Endgerät 21 ist ein Endgerät mit integriertem Adapter. Einheit 25 beinhaltet die handelsübliche Funktion des Endgerätes. Ein AC/DC-Umsetzer 23 ist vorgesehen zur Stromversorgung der Baugruppen des Endgerätes 21. Des weiteren sind zwei Filter 22 und 24 sowie ein 110 und/oder 220 Volt Anschluss zum Verbinden mit einer Steckdose des hausinternen Stromversorgungsnetzes 5 vorgesehen. Endgerät 21 ist beispielsweise ein Computer oder ein DECT-Telefon mit Ladestation. Telekommunikationssignale werden über Filter 24 übertragen, Wechselstromsignale AC über Filter 22. Filter 22 ist z.B. ein Tiefpassfilter mit einer Grenzfrequenz im Bereich von 50 Hz bis 70 Hz oder ein Bandpassfilter mit einer oberen Grenzfrequenz im Bereich von 50 Hz bis 70 Hz und einer unteren Grenzfrequenz im Bereich von 30 bis 50 Hz oder dergleichen. Filter 24 ist z.B. ein Hochpassfilter mit einer Grenzfrequenz im Bereich von 50 Hz bis 70 Hz oder ein Bandpassfilter mit einer unteren Grenzfrequenz im Bereich von 50 Hz bis 70 Hz oder dergleichen.

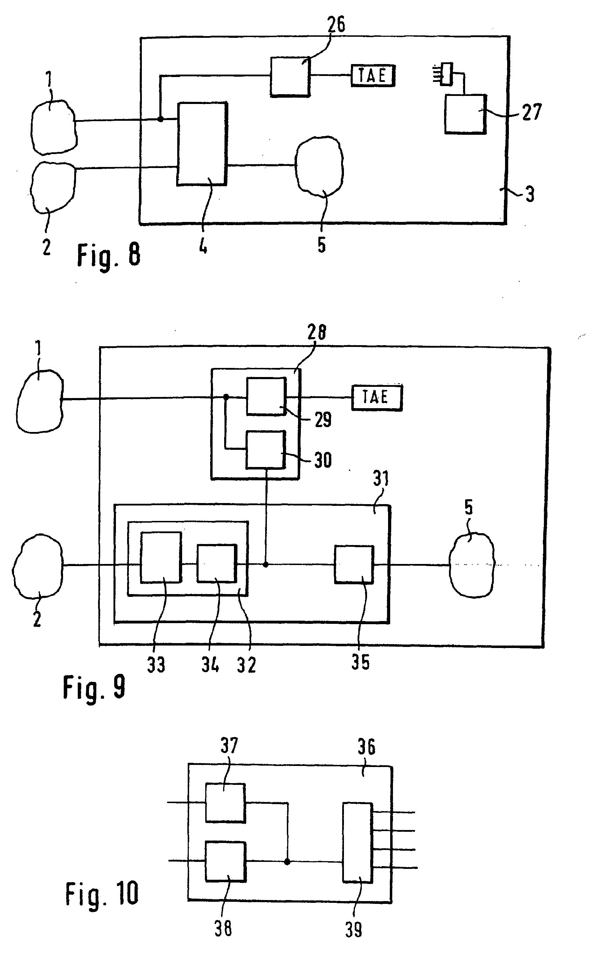

Fig. 8 zeigt eine schematische Darstellung einer weiteren Anbindung ans hausinterne Stromversorgungsnetz. Zusätzlich zur Anbindung nach Fig. 1 ist ein Netzabschluss 26 vorgesehen, der mit dem Telekommunikationsnetz verbunden ist. An den Netzabschluss 26 ist ein hausinternes Telekommunikationsnetz angeschlossen, das im einfachsten Fall aus einer Leitung mit einer TAE-Buchse bestehen kann. An die TAE-Buchse ist ein Endgerät 27 anschließbar. An die TAE-Buchse ist beispielsweise ein herkömmliches analoges Telefon angeschlossen. An einer Steckdose im Haus kann zusätzlich ein Computer angeschlossen werden, der z.B. über DSL einen schnellen Internet-Anschluss unabhängig von der analogen Telephonie hat, so dass gleichzeitig telefoniert und im Internet gesurft werden kann.

Das zweite Ausführungsbeispiel wird nun anhand der Figur 9 erläutert. Fig. 9 zeigt eine schematische Darstellung einer weiteren Anbindung ans hausinterne Stromversorgungsnetz. Die Filter der Vorrichtung 7 aus Fig. 4 sind nun örtlich aufgeteilt. Es ist ein Netzabschluss 28 mit einem integrierten Filter 30 vorgesehen und ein Stromzähler 32 mit einem integrierten Filter 34. Einheit 29 führt dabei die herkömmliche Funktion des Netzabschlusses aus und Filter 30 sperrt die Gleichstromsignale DC und die Wechselstromsignale AC und lässt die Telekommunikationssignale durch. Einheit 33 führt die herkömmliche Funktion des Stromzählers aus und Filter 34 sperrt die Telekommunikationssignale und lässt die Stromsignale durch. In Einheit 31 mit Stromzähler 32 und Sicherungskasten 35 wird somit die Anbindung des externen Telekommunikationsnetzes 1 ans hausinterne Stromversorgungsnetz 5 durchgeführt. Anstelle im Netzabschluss 28 kann Filter 30 auch im Stromzähler integriert werden.

Das dritte Ausführungsbeispiel wird nun anhand der Figur 10 erläutert. Fig. 10 zeigt einen Aufbau eines Sicherungskastens. Die Filter der Vorrichtung 7 aus Fig. 4 sind nun örtlich in den Sicherungskasten integriert. Sicherungskasten 36 ersetzt somit Sicherungskasten 8 und Vorrichtung 7 aus Fig. 3. Einheit 39 führt dabei die herkömmlichen Funktionen eines Sicherungskastens durch. Filter 37 sperrt die Gleichstromsignale DC und die Wechselstromsignale AC und lässt die Telekommunikationssignale durch. Filter 38 sperrt die Telekommunikationssignale und lässt die Stromsignale durch.

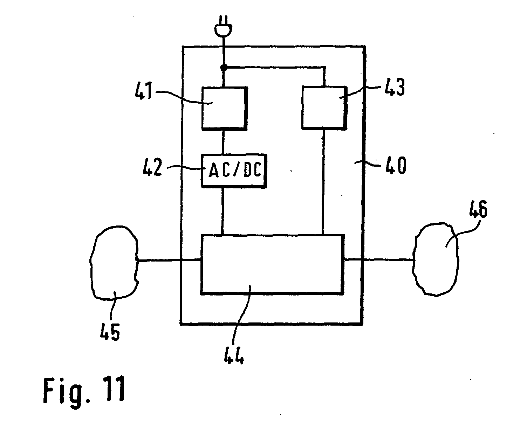

Das vierte Ausführungsbeispiel wird nun anhand der Figur 11 erläutert. Fig. 11 zeigt einen Aufbau einer Telekommunikations-Anlage.

Telekommunikations-Anlage 40 beinhaltet Einheit 44, die die herkömmlichen Funktionen einer Telekommunikations-Anlage durchführt. Zusätzlich sind Filter 41 und 43 sowie AC/DC-Umsetzer 42 vorgesehen. Es sind drei Anschlüsse vorgesehen. Ein Anschluss dient der Verbindung der Telekommunikations-Anlage 40 mit einem externen Telekommunikationsnetz 45, ein weiterer Anschluss dem Verbinden mit einem internen Telekommunikationsnetz 46 und ein weiterer Anschluss über einen 110 und/oder 220 Volt Stecker mit einem hausinternen Stromversorgungsnetz. Auf diese Art und Weise lässt sich das externe Telekommunikationsnetz 45 mit dem hausinternen Stromversorgungsnetz verbinden. Der 110 und/oder 220 Volt Stecker wird z.B. in eine Steckdose des hausinternen Stromversorgungsnetzes oder in eine Steckdose im Sicherungskasten eingesteckt. Filter 41 lässt Stromsignale durch und sperrt Telekommunikationssignale. Wechselstromsignale AC gelangen so zum AC/DC-Umsetzer 42, der die Gleichstromversorgung für die Baugruppen der Telekommunikations-Anlage 40 bereitstellt. Filter 43 lässt Telekommunikationssignale durch und sperrt Stromsignale. Über Filter 43 werden Telekommunikationssignale ins hausinterne Stromversorgungsnetz geleitet sowie Telekommunikationssignale aus dem hausinternen Stromversorgungsnetz empfangen.

Beliebige Kombinationen der Ausführungsbeispiele sind möglich. Die Leitungen des hausinternen Stromversorgungsnetzes sind beispielsweise neben Stromversorgungsleitungen a/b-Leitungen oder sogenannte Lead/Tip-Leitungen. Die Telekommunikationssignale werden z.B. mit einem oder mehr der nachfolgenden Standards übertragen: ISDN, ATM, TCP/IP, E1-T1, ADSL. Die Endgeräte arbeiten z.B. mit ISDN, GSM, DECT, Bluetooth, UMTS. Ein Adapter für ISDN-Endgeräte beinhaltet beispielsweise einen 110 und/oder 220 Volt Anschluss, einen TAE-Buchsen Anschluss, einen 60 Hz Tiefpass und einen nachgeschalteten AC/DC-Umsetzer zur Generierung des Gleichstroms, einen 60 Hz Hochpass und einen mit dem Gleichstrom gespeisten, nachgeschalteten 2-Draht-4-Draht Umsetzer zur Generierung einer S₀-Schnittstelle. An der TAE-Buchse werden die Telekommunikationssignale über eine S₀-Schnittstelle zusammen mit dem Gleichstrom zur Verfügung gestellt. Zusätzlich zu Telekommunikationssignalen können auch Steuersignale über das hausinterne Stromversorgungsnetz und das externe Telekommunikationsnetz übertragen werden. Steuersignale dienen z.B. der Haussteuerung, z.B. für Heizung, Kühlschrank, Fernsehgerät, Kaffeemaschine, intelligente Haushaltsgeräte.

## Patentansprüche

1. Vorrichtung (7) für einen Endkunden zur Generierung einer Verbindung zwischen einem Telekommunikationsnetz (1) eines Netzbetreibers und einem hausinternen Stromversorgungsnetz (5) des Endkunden zur Ermöglichung der Übertragung von Telekommunikationssignalen (POTS; ISDN; DSL) über das hausinterne Stromversorgungsnetz (5) des Endkunden.

2. Vorrichtung (7) nach Anspruch 1, **dadurch gekennzeichnet, dass** die Vorrichtung (7) ein Filter (10; 30; 37) zur Weiterleitung von Telekommunikationssignalen (POTS; ISDN; DSL) und zur Sperrung von Gleichstromsignalen (DC) aufweist und das Filter (10; 30; 37) zwischen Telekommunikationsnetz (1) und hausinternem Stromversorgungsnetz (5) geschaltet ist.

3. Vorrichtung (7) nach Anspruch 1, **dadurch gekennzeichnet, dass** die Vorrichtung (7) ein Filter (9; 34; 38) zur Sperrung von Telekommunikationssignalen (POTS; ISDN; DSL) und zur Weiterleitung von Wechselstromsignalen (AC) aufweist und das Filter (9; 34; 38) zwischen das hausinterne Stromversorgungsnetz (5) des Endkunden und ein Stromversorgungsnetz (2) eines Strom-Netzbetreibers geschaltet ist.

4. Vorrichtung (7) nach Anspruch 2, **dadurch gekennzeichnet, dass** das Filter (10; 30; 37) ein Hochpassfilter mit einer Grenzfrequenz im Bereich von 50 Hz bis 70 Hz ist oder ein Bandpassfilter mit einer unteren Grenzfrequenz im Bereich von 50 Hz bis 70 Hz.

5. Vorrichtung (7) nach Anspruch 3, **dadurch gekennzeichnet, dass** das Filter (9; 34; 38) ein Tiefpassfilter mit einer Grenzfrequenz im Bereich von 50 Hz bis 70 Hz ist oder ein Bandpassfilter mit einer oberen Grenzfrequenz im Bereich von 50 Hz bis 70 Hz.

6. Vorrichtung (7) nach Anspruch 1, **dadurch gekennzeichnet, dass** die Vorrichtung (7) als Stromzähler oder Sicherungskasten (36) mit einer Schnittstelle zum Telekommunikationsnetz oder als Netzabschluss oder Telekommunikations-Anlage mit einer Telekommunikations-Schnittstelle zum hausinternen Stromversorgungsnetz des Endkunden ausgeführt ist.

7. Lokales, hausinternes Stromversorgungsnetz (5) eines Endkunden beinhaltend eine Vorrichtung (7) zur Generierung einer Verbindung zwischen einem Telekommunikationsnetz (1) eines Netzbetreibers und dem hausinternen Stromversorgungsnetz (5) des Endkunden zur Ermöglichung der Übertragung von Telekommunikationssignalen (POTS; ISDN; DSL) über das hausinterne Stromversorgungsnetz (5) des Endkunden.

8. Verfahren zum Übertragen von Telekommunikationssignalen, bei dem aus einem Telekommunikationsnetz (1) eines Netzbetreibers empfangene Telekommunikationssignale (POTS; ISDN; DSL) über ein lokales, hausinternes Stromversorgungsnetz (5) eines Endkunden weitergeleitet werden.

9. Verfahren nach Anspruch 8, **dadurch gekennzeichnet, dass** aus dem Telekommunikationsnetz (1) des Netzbetreibers empfangene Gleichstromsignale (DC) nicht über das lokale, hausinterne Stromversorgungsnetz (5) des Endkunden weitergeleitet werden.

10. Verfahren nach Anspruch 8, **dadurch gekennzeichnet, dass** aus dem lokalen, hausinternen Stromversorgungsnetz (5) des Endkunden empfangene Telekommunikationssignale (POTS; ISDN; DSL) ins Telekommunikationsnetz (1) des Netzbetreibers eingespeist werden.
